# EUROPEAN PATENT APPLICATION

(11) **EP 1 712 521 A1**
(43) Date of publication of application: **18.10.2006**
(21) Application number: 03782796.1
(22) Date of filing: 17.12.2003
(51) Int. Cl.: C01B 31/02

(54) **APPARATUS AND METHOD FOR PREPARING FULLERENE**

(71) Applicant: Frontier Carbon Corporation, Tokyo 104-0031 (JP)
(72) Inventor: Yamamoto, Takaharu, c/o Frontier Carbon Corp., Kitakyushu-shi, Fukuoka 806-0004 (JP); Takakura, Tsuyoshi, c/o Frontier Carbon Corp., Kitakyushu-shi, Fukuoka 806-0004 (JP); Takehara, Hiroaki, c/o Frontier Carbon Corp., Kitakyushu-shi, Fukuoka 806-0004 (JP); Arikawa, Mineyuki, c/o Frontier Carbon Corp., Kitakyushu-shi, Fukuoka 806-0004 (JP)
(74) Representative: Vossius & Partner
(86) International application number: PCT/JP2003/016205
(87) International publication number: WO 2005/058755

(57) **Abstract**

Methods for producing fullerenes, comprising regulating a fullerene- and soot-containing high-temperature airflow formed through incomplete combustion or pyrolysis of a hydrocarbon fuel to a temperature greater than 260°C (preferably 300°C) but not greater than 900°C, passing the resultant airflow through a recovery device (12) using filter elements (30) made of ceramic or metal, to thereby recover a soot-containing powder separated from polycyclic aromatic compounds, wherein the recovery device (12) includes a soot separating unit (A) having a plurality of filter elements (30) allowing the powder to attach onto surfaces thereof and the airflow to pass therethrough and a powder storing unit (B) provided under the soot separating unit (A) for storing the separated soot, and the filter element (30) uses a heat-resistant filtering member exhibiting a filtering flow rate capability in a range of 0.2 to 10 m³/m²/minute and a pressure loss in a range of 0.1 to 35 Torr.

## Description

### TECHNICAL FIELD

The present invention relates to an apparatus and methods for producing fullerenes, i.e., new carbon materials obtained by either imperfect combustion or thermal decomposition of a hydrocarbon fuel. The fullerenes are spherical carbon molecules such as C60, C70, C76, C78, C82, C84, C86, C88, C90, C92, C94, and C96. The fullerenes also include higher fullerenes that are insoluble in a usual solvent such as toluene or xylene.

### BACKGROUND ART

As described in Japanese Patent Gazette No. 2802324 and No. 3404632, "fullerenes" is a general term to represent the third carbon allotrope next to diamond and graphite, and indicates closed hollow cage carbon molecules having networks of five-membered rings and six-membered rings as represented by C60, C70, etc. Existence of the fullerenes was finally confirmed in 1990 which is quite recent, and the fullerenes are a new carbon material. The fullerenes are confirmed to show special physical properties because of their unique molecular structures, and innovative applications have been developed rapidly in a wide range of fields such as, e.g., applications to superhard materials, pharmaceuticals, superconducting materials and semiconductor processing. Among the fullerenes, particularly C60 and C70 are relatively easy to synthesize, and thus future demand thereof is expected to grow explosively.

As conventional methods for producing fullerenes, for example, a laser vaporization method, a resistance heating method, an arc-discharge method, a high-frequency induction heating method, a combustion method, a naphthalene pyrolysis, etc. have been proposed. In accordance with any of these methods, fullerenes are generated as contained in soot. Accordingly, in order to collect generated fullerenes, fullerene-containing soot needs to be recovered first.

Particularly in the combustion method, which is considered one of the most cost-effective and efficient methods for producing fullerenes, the fullerene-containing soot is suspended in a high-temperature exhaust gas (predominantly containing a carbon monoxide gas and vapor) that is discharged from a fullerene-producing reactor. To cool down the high-temperature exhaust gas by a cooling unit and subsequently separate the fullerene-containing soot from the exhaust gas, for example, Published Japanese Patent Application No. 2003-160318 proposes a device employing filtering members made of ceramic or a sintered alloy.

However, since a solid-gas separation device using these filtering members generally has a high pressure loss, it is difficult to set the internal pressure conditions of the reactor optimum for mass production of the fullerenes in some cases.

When the filtering members made of ceramic or a sintered alloy are employed, an increase in speed of the exhaust gas passing through the filtering members disadvantageously causes adhesion of a large amount of powder to the filtering members in a short period of time. To solve the problem, backwashing needs to be performed in a short time in which the powder adhered to the filtering members is removed by providing an inert gas from a direction opposite to the traveling direction of the exhaust gas. During the backwashing, operation of part of the filtering members needs to be halted, which adversely affects operation of the entire apparatus. Furthermore, if the exhaust gas flows through the filtering members at a high speed and the filtering members have a high pressure loss, the soot is objectionably fed into pores of the filtering members. In this case, it is sometimes difficult for the clogged pores to be restored to their original condition even if the filtering members are backwashed. This brings about a problem that the filtering members become unusable when the clogging of the pores proceeds.

Meanwhile, a decrease in speed of the exhaust gas passing through the filtering members requires the filtering members to be vast in area for solid-gas separation on a large scale.

The present invention has been made in view of the above problems of the conventional arts, and an object of the present invention is to provide an apparatus and methods for producing fullerenes, operable to trap and recover fullerenes and soot from the high-temperature exhaust gas (hereinafter also referred to as an airflow) stably for a long period of time.

### DISCLOSURE OF INVENTION

To attain the above object, the present invention provides an apparatus for producing fullerenes, comprising a reactor operable to produce a fullerene- and soot-containing high-temperature airflow by imperfectly combusting or thermally decomposing a hydrocarbon fuel, and a recovery device operable to trap and recover a soot-containing powder contained in the airflow with or without fullerenes; wherein a temperature regulating unit is provided between the reactor and the recovery device, the temperature regulating unit regulating the high-temperature airflow generated from the reactor to a temperature greater than 260°C (preferably 300°C) but not greater than 900°C at which polycyclic aromatic compounds vaporize and supplying the airflow to the recovery device; the recovery device includes a soot separating unit provided with a plurality of filter elements and a powder storing unit provided under the soot separating unit, the soot separating unit allowing the soot-containing powder to adhere to one side of each of the filter elements and the airflow to pass through each of the filter elements from the one side of each of the filter elements to the other side of each of the filter elements, the powder storing unit storing the separated soot-containing powder; and each of the filter elements employs either one of metallic and ceramic heat-resistant filtering members having a filtering flow rate capability in a range of 0.2 to 10 m³/m²/minute and a pressure loss in a range of 0.1 to 35 Torr (preferably 0.5 to 15 Torr). Although the filtering flow rate capability is unrelated to the pressures (static pressures) of a gas during filtering, the filtering flow rate capability is determined based on, e.g., working pressures in a range of 20 to 200 Torr in the present invention. When the high-temperature airflow regulated by the temperature regulating unit to a temperature greater than 300°C but not greater than 900°C is supplied from the reactor to the recovery device, most of the polycyclic aromatic compounds are vaporized. As a result, the powder free of the polycyclic aromatic compounds is recovered in the recovery device.

The heat-resistant filtering members having a filtering flow rate capability of less than 0.2 m³/m²/minute need to be vast in area to stream a predetermined amount of a gas therethrough, thereby increasing equipment cost. In this instance, however, since flow velocity is low in terms of performance, the powder comprising one or two of the fullerenes and soot has a low adhesion energy. The powder having a low adhesion energy increases effectiveness of the reverse cleaning and decreases clogging inside the filter elements, thereby allowing continuous operation of the apparatus. Thus, a filtering flow rate capability near 0.2 m³/m²/minute is preferable. More preferably, a filtering flow rate capability is in a range of 0.2 to 6 m³/m²/minute. A filtering flow rate capability in a range of 1 to 5 m³/m²/minute is desirable to downsize the apparatus in view of the limit of the actual apparatus.

The heat-resistant filtering members having a filtering flow rate capability of more than 10 m³/m²/minute require a less filtration area. However, an increase in flow velocity disadvantageously raises adhesion energy of the powder, thereby requiring a higher energy for backwashing. Even if the filter elements are backwashed with a great energy (pressure), the filter elements cannot be restored to their original condition in some cases. Here, a gas flow rate for backwashing is preferably greater than a filtration flow rate.

The pressure loss of the heat-resistant filtering members is preferably as low as possible; however, it is difficult to produce heat-resistant filtering members having a pressure loss of less than 0.1 Torr. The heat-resistant filtering members having a pressure loss of more than 35 Torr impose a burden on a pressure reducing pump (specifically a vacuum pump) that maintains the entire system under a negative pressure, thereby making it impossible to optimize the internal pressure of the reactor in some cases. Another disadvantage is that the powder easily enters the interiors of the heat-resistant filtering members since a great pressure is imposed on both sides of the heat-resistant filtering members. The abovementioned functions and effects of the apparatus according to the present invention are applicable to first and second methods for producing fullerenes described below.

A pressure (Pw) of an inert gas used for backwashing is preferably in a range of 10 to 1000 times (e.g., 50 to 500 kPa) filter element differential pressure (differential pressure (Ps) to start backwashing, e.g., 7.5 to 15 Torr) at which backwashing of the clogged filter elements is started. The pressure (Pw) is regulated in the above range because when the pressure (Pw) during backwashing is less than 10 times the differential pressure (Ps) to start backwashing, energy for backwashing is insufficient for removal of foreign matter (powder) clogged in the filter elements. When the pressure (Pw) during backwashing exceeds 1000 times the differential pressure (Ps) to start backwashing, the apparatus requires a greater motivity and backwashing capability becomes saturated.

In the apparatus for producing fullerenes according to the present invention, the pressure loss of the heat-resistant filtering members is set so that a pressure in the reactor falls in a range of 20 to 200 Torr. Thus, the fullerenes can be produced while the pressure in the reactor is maintained in a predetermined pressure range.

In the apparatus for producing fullerenes according to the present invention, an upright reactor having an exhaust port and a burner respectively disposed at upper and lower portions thereof may be employed as the above-mentioned reactor, of course. The exhaust port discharges the fullerene- and soot-containing high-temperature exhaust gas from the reactor. However, it is preferable to employ an inverted reactor having the burner and the exhaust port respectively provided at the upper (ceiling) and lower portions of the reactor. Use of the inverted reactor prevents blockage of the burner caused by falling of the soot generated from the reactor, and enables long-term continuous operation of the apparatus. The burner includes one that imperfectly combusts or thermally decomposes the hydrocarbon fuel.

In the apparatus for producing fullerenes according to the present invention, the temperature regulating unit including a cylindrical body having a circular cross section, whose exterior is cooled down is more preferable than, e.g., a normal heat exchanger. The temperature regulating unit is configured to flow the fullerenes and the soot therein, thereby cooling down the fullerenes and the soot. Such configuration allows a decrease in the amount of the soot trapped in the temperature regulating unit, and ensures the long-term continuous operation of the apparatus. More preferably, the fullerene- and soot-containing high-temperature airflow enters the cylindrical body in a direction tangential to the cylindrical body and flows in a swirl inside the cylindrical body. Accordingly, the soot positively flows along an inner circumference of the cylindrical body and moves downstream while blowing away the soot that is about to adhere to the inner circumference of the cylindrical body. Hence, degree of clogging in the cylindrical body (flow conduit) caused by the soot is reduced. Furthermore, the high-temperature airflow flows together with the soot in the conduit of the cylindrical body along the inner circumferential surface thereof, which improves heat exchange effectiveness.

In the apparatus for producing fullerenes according to the present invention, it is preferable that the powder storing unit of the recovery device includes a powder level indicator and an opening and closing valve, the powder level indicator detecting a storage amount of the soot-containing powder, the opening and closing valve discharging the powder from the powder storing unit in response to a detection signal from the powder level indicator. When a predetermined amount of the powder accumulates in the powder-storing unit, the powder level indicator detects accumulation of the powder and automatically discharges the powder from the powder storing unit, thereby allowing automatic operation of the apparatus.

In the apparatus for producing fullerenes according to the present invention, the soot separating unit may include either one or both of a gas supply unit and a vibrating unit. The gas supply unit is operable to pass a non-oxygenated gas through each of the filter elements from the other side of each of the filter elements to the one side of each of the filter elements, thereby removing the soot-containing powder adhered to the one side. The vibrating unit is operable to vibrate each of the filter elements, thereby removing the soot-containing powder adhered to each of the filter elements by vibration. The soot separating unit thus configured is operable to remove the soot-containing powder adhered to each of the filter elements.

In the apparatus for producing fullerenes according to the present invention, it is preferable that a partition is provided in the soot separating unit to divide the plurality of filter elements into a plurality of filter element groups. The partition allows the soot adhering to the filter elements to be removed for each of the filter element groups. As a result, each of the filter elements can be cleaned without stopping operation of the fullerene-producing apparatus including the recovery device, thereby allowing continuous running of the fullerene-producing apparatus.

In the apparatus for producing fullerenes according to the present invention, it is preferable that each of the filter elements is a bottomed cylinder into which the fullerene- and soot-containing high-temperature airflow flows from an outside of the cylinder to an inside of the cylinder. The bottomed cylinder allows the soot-containing powder to adhere to an outer circumference and a bottom thereof, and enables easy installation of each of the filter elements in the recovery device.

A first method for producing fullerenes according to the present invention, comprises: a first step of producing a fullerene- and soot-containing high-temperature airflow by imperfectly combusting or thermally decomposing a hydrocarbon fuel in a reactor; a second step of regulating the fullerene- and soot-containing airflow generated in the first step by a temperature regulating unit to a temperature greater than 300°C but not greater than 600°C at which polycyclic aromatic compounds contained in the airflow remain vaporized; a third step of trapping and recovering soot together with fullerenes contained in the fullerene- and soot-containing airflow regulated in temperature in the second step using a recovery device having a plurality of filter elements, each of which is made of either one of metallic and ceramic heat-resistant filtering members, while allowing the polycyclic aromatic compounds in the airflow to pass through the recovery device; and a fourth step of collecting the fullerenes by a solvent or vaporization from the mixture of the soot and the fullerenes recovered in the third step; wherein each of the filter elements employs the heat-resistant filtering member having a filtering flow rate capability in a range of 0.2 to 10 m³/m²/minute and a pressure loss in a range of 0.1 to 35 Torr. Pursuant to the first method of producing fullerenes, the mixture comprising the soot and fullerenes free of the polycyclic aromatic compounds can be recovered efficiently by the recovery device employing the heat-resistant filtering members.

A second method for producing fullerenes according to the present invention, comprises: a first step of producing a fullerene- and soot-containing high-temperature airflow by imperfectly combusting or thermally decomposing a hydrocarbon fuel in a reactor; a second step of regulating the fullerene- and soot-containing airflow generated in the first step by a temperature regulating unit to a temperature greater than 600°C but not greater than 900°C (preferably 700 to 900°C) at which polycyclic aromatic compounds and fullerenes contained in the airflow remain vaporized; a third step of flowing the fullerene- and soot-containing airflow regulated in temperature in the second step through a recovery device provided with a plurality of filter elements, each of which is made of either one of metallic and ceramic heat-resistant filtering members, thereby removing soot from the airflow; and a fourth step of further cooling down the high-temperature airflow from which the soot has been removed in the third step to solidify the fullerenes contained in the airflow, thereby recoyering the fullerenes; wherein each of the filter elements employs the heat-resistant filtering member having a filtering flow rate capability in a range of 0.2 to 10 m³/m²/minute and a pressure loss in a range of 0.1 to 35 Torr. Pursuant to the second method, the fullerenes can be separated from the soot easily without using a solvent. In the method, if the high-temperature airflow from the reactor is adjusted to have a temperature in a range of 600 to 700°C, part of the fullerenes can be trapped in the recovery device, but the amount of the trapped fullerenes is small. Thus, if the fullerenes are separated from the soot by a solvent, there are advantages that a total amount of collected fullerenes increases and that a great amount of the solvent is not required.

In the second method according to the present invention, the fourth step comprises cooling down the high-temperature airflow from which the soot has been removed to a temperature greater than 300°C but not greater than 600°C and passing the airflow through a heat-resistant filter, thereby recovering the fullerenes free of the polycyclic aromatic compounds. As a result, the fullerenes free of the soot and polycyclic aromatic compounds are obtained. Alternatively, the high-temperature airflow from which the soot has been removed may be cooled down to 200°C or less and transmitted through filters made of synthetic resin sheets to recover the fullerenes excluding the soot. In the alternative, the recovery device can be constructed at low cost.

In the first and the second methods according to the present invention, it is preferable that the reactor is operable to discharge the fullerene- and soot-containing airflow generated in the reactor from the reactor through a lower portion (a bottom) thereof. As thus constructed, the reactor streams the soot generated in the reactor out of the reactor together with the exhaust gas, thereby preventing, e.g., clogging of the burner located at the upper portion of the reactor. As a result, the fullerenes can be produced continuously.

In the present invention, sintered metal is preferably used to form the metallic heat-resistant filtering members. Alternatively, a meshed plate or a porous plate may be used to form the heat-resistant filtering members.

### BRIEF DESCRIPTION OF DRAWINGS

FIG. 1 is a descriptive illustration of a fullerene-producing apparatus in accordance with one embodiment of the present invention;
FIG. 2 is a graph illustrating how fullerene-containing soot is reduced in weight when the fullerene-containing soot is heated;
FIG. 3 is a graph illustrating results from qualitative analysis of a gas generated by heating polycyclic aromatic compounds, fullerenes and soot produced in accordance with a conventional method; and
FIG. 4 is a graph illustrating a pressure loss when filter elements made of a sintered alloy used in a method for producing fullerenes in accordance with the embodiment are employed.

### BEST MODE FOR CARRYING OUT THE INVENTION

For a more complete understanding of the present invention, one embodiment of the present invention is now described with reference to the accompanying drawings.

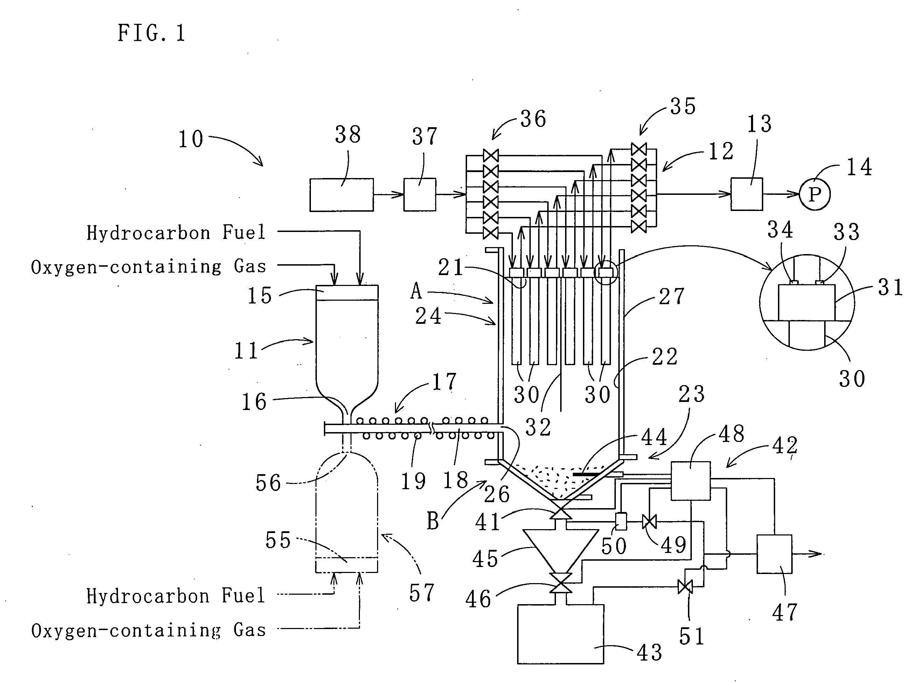

FIG. 1 illustrates a fullerene-producing apparatus 10 to which a method for producing fullerenes according to the embodiment of the present invention is applied. As illustrated in FIG. 1, the fullerene-producing apparatus 10 includes a reactor 11, a recovery device 12, a gas cooling unit 13, and a pressure reducing pump 14. The reactor 11 is operable to imperfectly combust a hydrocarbon fuel to produce fullerenes. The recovery device 12 is operable to cool down a fullerene- and soot-containing high-temperature airflow generated from the reactor 11 to a predetermined temperature, and separate and collect soot-containing powder from the airflow. The gas cooling unit 13 is operable to cool down the airflow discharged from the recovery device 12. The pressure reducing pump 14 is operable to discharge the airflow generated in the reactor 11 out of the reactor 11 together with the fullerenes and soot while retaining the interior of the reactor 11 under reduced pressures. The following discusses details of each of the above components.

Pursuant to the present embodiment, the fullerenes are produced by a combustion method. Accordingly, the reactor 11 has an internal pressure lower than atmospheric pressure, and is preferably in a near vacuum state (e.g., 20 to 200 Torr, more preferably 30 to 100 Torr). The reactor 11 has a burner 15 and an exhaust port 16 disposed at an upper portion (a ceiling portion) and a lower portion of the reactor 11, respectively. The burner 15 is operable to either incompletely burn or thermally decompose the hydrocarbon fuel. The exhaust port 16 is operable to discharge the fullerene- and soot-containing, high-temperature airflow (hereinafter also referred to as "exhaust gas") out of the reactor 11. This reactor construction is advantageous in that an ejection port of the burner 15 is resistant to being clogged up with the soot formed within the reactor 11. The lower portion of the reactor 11 is gradually reduced in diameter toward the exhaust port 16, thereby smoothly blowing the fullerene-containing soot formed in the reactor 11 out of the reactor 11 through the exhaust port 16.

The interior of the reactor 11 is lined with refractories because the internal temperature of the reactor 11 is elevated to 1,500 to 2,000°C. The exterior of the reactor 11 is made of water-cooled, heat-resistant steel or stainless steel.

The burner 15 is supplied with a fuel gas that is a mixture of a gaseous hydrocarbon fuel and an oxygen-containing gas. In certain cases, an inert gas such as an argon gas may be added to the fuel gas depending on conditions. In this instance, those constituents are preferably mixed together in such a manner that a molar ratio of carbon to oxygen lies within a range of, e.g., 0.97 to 1.36.

Aromatic hydrocarbons having carbon atoms in a range of six to twenty, e.g., benzene, toluene, xylene, naphthalene, methylnaphthalene, anthracene, phenanthrene, etc. are desirably employed as the above-described hydrocarbon fuel. In conjunction with those aromatic hydrocarbons, aliphatic hydrocarbons such as hexane, heptane, and octane may be used. As a further alternative, a mixture having two or more six-membered rings, or a mixture of one or more six-membered rings and one or more five-membered rings may be employed.

A temperature regulating unit 17 is disposed between the reactor 11 and the recovery device 12. The temperature regulating unit 17 includes a piping passage 18 and a water-cooled pipe 19 that extends around the exterior of the piping passage 18. The piping passage 18 is made of a heat-resistant metallic material (e.g., stainless steel or heat-resistant steel), and comprises a cylindrical body having a circular cross section. The fullerene- and soot-containing exhaust gas enters the piping passage 18 from the reactor 11 through the exhaust port 16 in a direction tangential to the piping passage 18. In the piping passage 18, the fullerene- and soot-containing exhaust gas flows in a swirl in efficient contact with a pipe wall of the piping passage 18, and cools down to a temperature of, e.g., greater than 260°C (preferably 300°C) but not greater than 600°C (more preferably 350 to 500°C). The exhaust port 16 in perpendicular contact with the piping passage 18 may altematively be slanted at angles of, e.g., nearly 5 to 30 degrees in a direction oblique to the piping passage 18 in order to feed the exhaust gas in a direction consistent with a direction in which the piping passage 18 extends. The temperatures can be regulated in accordance with a change in length of the piping passage 18 and a change in either amount or temperature of supplied cooling water. The flow of the exhaust gas in a swirl inside the piping passage 18 as just discussed above prevents the piping passage 18 from clogging up with the soot contained in the exhaust gas.

Pursuant to the present embodiment, the water-cooled pipe 19 spirally extends around the exterior of the piping passage 18, thereby forming the temperature regulating unit 17. Alternatively, the exterior of the piping passage 18 may be jacketed. Further altematively, the soot-containing gas may be streamed turbulently through the piping passage 18, with the result that the soot-containing gas can positively be reduced in temperature. In this instance, however, the piping passage 18 is likely to be clogged up with the soot therein. Therefore, the soot-containing gas is desirably fed through the piping passage 18 as fast as possible.

The fullerene- and soot-containing exhaust gas controlled at the predetermined temperatures by the temperature regulating unit 17 is supplied to the recovery device 12. The recovery device 12 has a casing 24 formed by a ceiling portion 21, a cylindrical body portion 22, and a conical portion 23 integrally connected to the bottom of the body portion 22. The body portion 22 has a connecting port 26 positioned at a lower portion thereof, through which the piping passage 18 is connected to the cylindrical body 22. The body portion 22 and the conical portion 23 include a temperature regulating jacket 27. The temperature regulating jacket 27 is operable to adjust the inner surface temperature of the casing 24 by feeding a heat medium into the temperature regulating jacket 27 through an incoming port thereof and subsequently discharging the heat medium from the temperature regulating jacket 27 through an outgoing port thereof. The inner surface temperature of the casing 24 can be regulated to, e.g., a range of greater than 300 to 400°C in accordance with an appropriate adjustment in type, temperature, and flow rate of the heat medium that is circulated through the temperature regulating jacket 27. When the exhaust gas does not contain a great amount of polynuclear aromatic compounds, a refrigerant (e.g., water) may be admitted into the temperature regulating jacket 27, thereby rapidly reducing a temperature of the collected mixture of the fullerenes and soot (the fullerene-containing soot).

In the present embodiment, a soot-separating unit "A" operable to separate and recover the fullerene- and soot-containing powder from the exhaust gas is provided in the body portion 22 and the ceiling portion 21. A powder storing unit "B" operable to store the powder separated by the soot separating unit "A" is provided in the conical portion 23.

A multiplicity of filter elements 30 constituting the soot separating unit "A" are positioned within the recovery device 12 at an upper portion thereof in a manner that an opening 31 formed on the top end of each of the filter elements 30 extends upward from the ceiling portion 21. Each of the filter elements 30 is formed by a heat-resistant filtering member. The filter elements 30 are divided into a plurality of filter element groups by partitions 32 made of plates. Each of the partitions 32 is open at the bottom thereof. The filter elements 30 are mounted to permit the main portions of the filter elements 30 to be located within the casing 24. Each of the filter elements 30 has a cylindrical shape with the bottom thereon. The openings 31 at upper portions of the filter elements 30 are designed to serve as outlets, through which the filtered exhaust gas leaves the filter elements 30. The partitions 32 can be made of, e.g., stainless steel or other heat-resistant steel. A cooling unit such as a water cooling jacket may be disposed on each of the partitions 32.

Each of the openings 31 of the filter elements 30 includes an exhaust port 33 and a gas feeding port 34. The exhaust ports 33 allow the exhaust gas to be admitted into the filter elements 30 from the outer surfaces toward the inner surfaces thereof. The gas feeding ports 34 allow, e.g., a nitrogen gas (an example of non-oxidized gases) to penetrate the filter elements 30 from the inner surfaces to the outer surfaces thereof. The filter elements 30 are formed by sintered metallic, heat-resistant filtering members that are made of a high-temperature, heat-resistant metal such as, e.g., stainless steel, Inconel, and Hastelloy. The sintered metal is an example of porous metal materials. The opening porosity and opening pore diameter of the heat-resistant filtering members, and communicating state of the opening pores are controlled to provide a filtering flow rate capability of 0.2 m³/m²/minute or more. A preferred upper limit to the filtering flow rate capability is 10 m³/m²/minute. A still further preferred filtering flow rate capability ranges from 0.2 to 6 m³/m²/minute. In view of actual operations, the filtering flow rate capability may range from 1 to 5 m³/m²/minute. Pressure of the gas in each of the filter elements 30 is obtained by subtracting a pressure drop in the piping passage 18 from a pressure within the reactor 11, thus becoming an extremely low pressure, e.g., about 20 to 200 Torr.

Pursuant to the present embodiment, each of the filter elements 30 is illustrated as a hollow body having one end closed (bottomed cylindrical body). Alternatively, another filter element in the form of a cylindrical body having both ends opened may be employed. In the alternative, the cylindrical body including upper and lower connection ports may be vertically positioned to expel the exhaust gas from the cylindrical body through the upper connection port, and to feed a reverse cleaning gas into the cylindrical body through the lower connection port when necessary.

To fabricate the filter element 30 using the heat-resistant metallic filtering member, metal as thin as, e.g., some 0.2 to 3 mm may be used.

Pursuant to the present embodiment, the filter elements are vertically positioned. Alternatively, they may be disposed horizontally. In the alternative, the cylindrical body having both ends opened may be used as the filter element to expel the exhaust gas from the cylindrical body through the both ends thereof, thereby filtering the fullerene-containing soot.

Pursuant to the present embodiment, the exhaust gas is introduced into the cylindrical filter elements from the outer surfaces to the inner surfaces thereof. Alternatively, the exhaust gas may be flowed through the cylindrical filter elements from the inner surfaces to the outer surfaces thereof. In the alternative, each of the cylindrical filter elements desirably has the bottom end opened to permit the fullerene-containing soot to fall out of the cylindrical filter element by gravity when the cylindrical filter element is backwashed.

Each of the exhaust ports 33 at the openings 31 of the filter elements 30 is connected to the gas cooling unit 13 through a corresponding opening and closing valve 35. The exhaust gas having flown though the recovery device 12 is cooled down by the gas cooling unit 13 to a temperature in a range of 100°C to near room temperature before being conveyed to the pressure reducing pump 14. As a result, the fullerenes and soot in the exhaust gas adhere to the outer circumferences of the filter elements 30, and the attached fullerenes and soot are ultimately collected therefrom. The gas cooling unit 13 is formed by a heat exchanger designed to use water as a refrigerant. The pressure reducing pump 14 is operable to retain the interior of the reactor 11 in a depressurized state, and plays an important role to permit the fullerene- and soot-containing exhaust gas generated from the reactor 11 to be introduced into the recovery device 12 through the temperature regulating unit 17.

Each of the gas feeding ports 34 at the openings 31 of the filter elements 30 is connected to a gas tank 38 through a corresponding opening and closing valve 36 and a gas pressurizing unit 37. The gas tank 38 supplies a nitrogen gas (an example of inert gases). The system is designed to open the opening and closing valves 36 to blow the high-pressured nitrogen gas into the filter elements 30 when large amounts of the fullerenes and soot adhere to the filter elements 30. As a result, the affixed fullerenes and soot are detached from the filter elements 30, and accordingly the filter elements 30 are backwashed. The backwashing of the filter elements 30 is carried out for each of the filter element groups, thereby allowing the fullerene-producing apparatus 10 to run continuously. It is preferable that a heating unit is provided in the gas pressurizing unit 37 or on another gas passage to elevate a temperature of the nitrogen gas passing through the opening and closing valves 36 so that the nitrogen gas supplied to each of the filter elements 30 has a temperature of 300°C or more and the elevated temperature of the filter element 30 is maintained. The above-mentioned opening and closing valves 36, the gas pressurizing unit 37 and the gas tank 38 form a gas supply unit.

The casing 24 of the recovery device 12 has the powder storing unit "B" formed at the lower portion thereof. The powder storing unit "B" stores the soot-containing powder, i.e., the powder predominantly containing the fullerenes and the soot, which has been removed from each of the filter elements 30. The powder accumulated in the powder storing unit "B" is discharged into a collecting box 43 through an automatic powder discharging unit 42 which includes a first opening and closing valve 41 located in a lower portion of the powder storing unit "B". The powder storing unit "B" has a thermocouple 44 which is an example of powder level indicators serving to measure a level of the deposited powder, i.e., a storage amount of the powder.

The removal of the powder adhering to the filter elements 30 on the outer surfaces thereof allows the fullerene-containing soot to accumulate in the powder storing unit "B", with a consequential gradual increase in level of the powder. The thermocouple 44 is ultimately buried under the accumulated powder, and thus temperatures detected by the thermocouple 44 are varied. The thermocouple 44 always detects the internal temperature of the powder storing unit "B", and an amount of the stored powder within the powder storing unit "B" is detectable in accordance with variations in detected temperatures. The inner surface of the powder storing unit "B" depressurized to nearly 20 to 200 Torr is regulated in temperature within the range of 300 to 500°C. Such temperature and pressure conditions never allow the accumulated powder to become wet because of moisture, and ensure that the powder always has fluidity.

The casing 24 including the powder storing unit "B" has the inner surface maintained at temperatures greater than 300°C. Such inner surface temperatures allow the polycyclic aromatic compounds to be held in a gaseous state, and the gaseous polycyclic aromatic compounds flow through the filter elements 30. At this time, very few polycyclic aromatic compounds are mingled with the powder. As described above, when a small amount of or substantially no polycyclic aromatic compounds are present in the airflow, a surface temperature of the powder storing unit "B" may be reduced to near room temperature to cool down the powder positively.

The automatic powder discharging unit 42 includes a substantially conical-shaped, intermediate vessel 45 connected to the first opening and closing valve 41, the collecting box 43 connected to the bottom of the intermediate vessel 45 through a second opening and closing valve 46, a discharge pump 47 operable to reduce the internal pressure of the intermediate vessel 45 and that of the collecting box 43, and a control unit 48 operable to control those components of the automatic powder discharging unit 42. The intermediate vessel 45 made of, e.g., stainless steel is connected to the discharge pump 47 through an opening and closing valve 49. A pressure sensor 50 is disposed on a pipeline that extends to the discharge pump 47 through the opening and closing valve 49. The pressure sensor 50 enters an output signal into the control unit 48. The collecting box 43 can be made of, e.g., stainless steel. Another pipeline connects the collecting box 43 to the discharge pump 47 through an opening and closing valve 51. The intermediate vessel 45 and the collecting box 43 include respective gas supply pipes (not shown), through which the nitrogen gas is supplied thereto.

The control unit 48 includes a programmable controller. The thermocouple 44 and the pressure sensor 50 enter detection signals into the control unit 48 to control the first and second opening and closing valves 41, 46 and the opening and closing valves 49, 51 in sequence, thereby transferring the accumulated powder from the powder storing unit "B" to the collecting box 43 through the intermediate vessel 45. Such transferring operation is executed in accordance with programs installed in the control unit 48, and is performed synchronously with the step of trapping the fullerene-containing soot within the recovery device 12. As a result, the mixture of the fullerenes and the soot is continuously collectable.

The following discusses a method of producing fullerenes using the fullerene-producing apparatus 10.

The first and second opening and closing valves 41, 46 as well as all of the opening and closing valves 36 are closed, and all of the opening and closing valves 35 are opened. The pressure reducing pump 14 is run to depressurize the interiors of the reactor 11 and the recovery device 12. The recovery device 12 introduces vapor or another heat medium into the temperature regulating jacket 27, and then discharges the vapor out of the temperature regulating jacket 27 through the outgoing port thereof, thereby regulating the inner surface temperature of the recovery device 12 to a range of, e.g., 200 to 300°C or gradually to a range of greater than 300 to 400°C. Water is fed to the water-cooled pipe 19 formed around the exterior of the piping passage 18, thereby cooling down the piping passage 18.

In the reactor 11, the burner 15 is supplied with toluene (an example of hydrocarbon fuels) and an oxygen-argon mixed gas (an example of oxygen-containing gases) to imperfectly combust them, thereby producing the fullerene-containing soot. The produced, fullerene-containing soot is suspended in a concomitant gas predominantly containing a carbon monoxide gas and vapor, thereby forming the airflow (exhaust gas). The airflow is streamed into the recovery device 12 through the piping passage 18. The fullerene- and soot-containing exhaust gas from the reactor 11 is cooled down during the transfer through the piping passage 18. For example, the exhaust gas having a temperature of 1,500 to 2,000°C blown out of the reactor 11 is cooled down to a temperature of 400°C when entering the recovery device 12. The lower temperature limit of the exhaust gas can be 260 or 300°C depending on generation of the polycyclic aromatic hydrocarbons.

According to the combustion method, the fullerenes are usually produced under a pressure lower than atmospheric pressure. An appropriate selection can be made as to how much the pressure is reduced. More specifically, throughput of the pressure reducing pump 14 is regulated in such a manner that the pressure falls within a range of, e.g., 20 to 200 Torr (more preferably 30 to 100 Torr).

The exhaust gas admitted into the recovery device 12 is diverted into several streams by the partition plates 32 positioned within the recovery device 12, with the result that the exhaust gas is uniformly blown into each of the filter element groups. In each of the filter elements 30 included in the filter element groups, the exhaust gas permeates each of the filter elements 30 from the outer surface to the inner surface thereof, and the fullerenes and the soot suspending in the exhaust gas are trapped by and adhered to the outer surface of each of the filter elements 30. Meanwhile, the exhaust gas having passed through the filter elements 30 is fed to the pressure reducing pump 14 through the opening and closing valves 35 and the gas cooling unit 13, and then discharged from the pressure reducing pump 14 through an exhaust port thereof.

After the high-temperature exhaust gas from the reactor 11 is blown into the recovery device 12 for a predetermined period of time, the fullerene-containing soot adhering to the filter elements 30 on the outer surfaces thereof is removed therefrom for each of the filter element groups. To achieve the purpose, the nitrogen gas is initially introduced from the gas tank 38 into the gas pressurizing unit 37, in which the nitrogen gas is pressurized to a predetermined gas pressure of e.g., 0.001 to 0.1 Mpa. Subsequently, each of the opening and closing valves 36 is opened which is connected through an exhaust pipe to the gas feeding port 34 in corresponding one of the openings 31 of the filter elements 30 in one of the filter element groups, from which the fullerene-containing soot is to be removed. Thereby, the nitrogen gas is brought into corresponding one of the filter elements 30 through the opening 31.

The nitrogen gas is blown out of the filter elements 30 from the inner surfaces to the outer surfaces thereof, and at this time, the blown gas lifts and rips off the fullerenes and soot formed on the outer surfaces of the filter elements 30, thereby removing the fullerenes and soot therefrom. The blown nitrogen gas is mingled with the exhaust gas from the reactor 11, and the mingled nitrogen gas moves toward the pressure reducing pump 14 through the other filter elements 30. When the removal of the fullerenes and soot performed by the blowing of the nitrogen gas for a predetermined period of time is completed, the opening and closing valves 36 are closed, the gas pressurizing unit 37 is stopped, and the opening and closing valves 35 are opened. When the opening and closing valves 35 are opened, the trapping of the fullerene-containing soot is resumed in each of the filter element groups where the removal of the fullerenes and soot from the filter elements 30 has been completed. In the other filter element groups, the same operations as described above are performed in sequence to remove the adhered fullerene-containing soot from each outer surface of the filter elements 30.

The fullerene-containing soot removed from the filter elements 30 accumulates in the form of powder in the powder storing unit "B" at the lower portion of the recovery device 12. At the beginning, the thermocouple 44 provided in the powder storing unit "B" detects the temperature of the exhaust gas flowing in the powder storing unit "B". The accumulated fullerene-containing soot gradually increases in amount, and the thermocouple 44 is ultimately buried under the soot. The buried thermocouple 44 detects the temperature of the fullerene-containing soot, and the detected temperatures are varied. When the variation in temperature enters the control unit 48, the control unit 48 runs the discharge pump 47 and opens the opening and closing value 49, thereby evacuating the intermediate vessel 45. At that time, when an oxygen-containing gas such as air is present in the intermediate vessel 45, the nitrogen gas is introduced into the intermediate vessel 45 through the gas supply pipe (not shown) to replace the oxygen-containing gas by the nitrogen gas before the intermediate vessel 45 is evacuated. The internal pressure of the intermediate vessel 45 is detected using the pressure sensor 50. When the pressure sensor 50 detects that the intermediate vessel 45 is matched in internal pressure with the recovery device 12, the opening and closing valve 49 is closed to stop degassing the intermediate vessel 45.

Subsequently, the first opening and closing valve 41 is opened to permit the powder formed by the mixture of the fullerenes and soot to fall into the intermediate vessel 45. Then, the first opening and closing valve 41 is closed. The opening and closing valve 51 is opened to evacuate the collecting box 43. When the internal pressure of the collecting box 43 is reduced below that of the intermediate vessel 45, the first opening and closing valve 41 is closed. Thereafter, the second opening and closing valve 46 is opened to transfer the powder from the intermediate vessel 45 into the collecting box 43. Then, the second opening and closing valve 46 is closed. Next, the nitrogen gas is introduced into the collecting box 43 through the gas supply pipe (not shown) to pressurize the interior of the collecting box 43 to a degree equal to atmospheric pressure, and the pressurized collecting box 43 is sealed. The sealed collecting box 43 is detached from the second opening and closing valve 46 to bring the fullerene-containing soot to the next processing stage at which the fullerenes are separated from the soot.

The mixture of the fullerenes and soot (the fullerene-containing soot) can be separated into the fullerenes and carbonaceous high-molecular-weight components (the soot) in accordance with any method. For example, there is a representative method operable to obtain an extract fluid having the fullerenes dissolved therein by mixing an extracting solvent (a solvent) with the soot mixture that includes the fullerenes and carbonaceous high-molecular-weight components. Furthermore, there is an evaporation method operable to sublimate and separate the fullerenes from the above-described soot mixture including the fullerenes and carbonaceous high-molecular-weight components by heating the soot mixture at high temperatures in the presence of an inert gas, i.e., in the absence of oxygen.

As the extracting solvent for use in the acquirement of the extract fluid containing the dissolved fullerenes, an aromatic hydrocarbon capable of dissolving only the fullerenes but incapable of dissolving the soot is used. The aromatic hydrocarbon can be any hydrocarbon compound having at least one benzene nucleus in a molecule. More specifically, the aromatic hydrocarbon includes alkylbenzenes such as benzene, toluene, xylene, ethylbenzene, n-propylbenezene, isopropylbenzene, n-butylbenzene, sec-butylbenzene, tert-butylbenzene, 1,2,3-trimethylbenzene, 1,2,4-trimethylbenzene, 1,3,5-trimethylbenzene, 1,2,3,4-tetramethylbenzene, 1,2,3,5-tetramethylbenzene, diethylbenzene, and cymene; alkylnaphthalenes such as 1-methylnaphthalene; and tetralin.

The solvent containing the dissolved fullerenes is vaporized to collect the fullerenes therefrom.

As illustrated in FIG. 1, the above-mentioned embodiment employs the inverted reactor 11 having the burner 15 and the exhaust port 16 formed at the upper and lower portions thereof, respectively. Alternatively, an upright reactor 57 may be used, as illustrated by chain double-dashed lines in FIG. 1. The upright reactor 57 has a burner 55 and an exhaust port 56 provided at lower and upper portions thereof, respectively. In the alternative, however, the soot generated within the reactor 57 falls and deposits on the burner 55. Therefore, the reactor 57 must be cleaned at appropriate time intervals. As a further countermeasure, the exhaust gas may be streamed at higher speeds within the reactor 57 to prevent the soot from falling by gravity.

Pursuant to the present embodiment, the exhaust gas fed to the recovery device 12 is regulated in temperature to a range of greater than 300 to 600°C, thereby passing the polycyclic aromatic compounds through the recovery device 12 and collecting the fullerene- and soot-containing powder by the recovery device 12. Pursuant to a method and an apparatus for producing fullerenes in accordance with another embodiment, a second recovery device may be disposed between the opening and closing valves 35 and the pressure reducing pump 14. The second recovery device has a second temperature regulating unit and heat-resistant filters connected in series. In this case, the exhaust gas fed to the recovery device 12 is regulated to have a temperature greater than 600°C but not greater than 900°C (preferably 700 to 900°C), and the exhaust gas supplied to the second recovery device is regulated by the second temperature regulating unit to a temperature greater than 300°C but not greater than 600°C. When the exhaust gas has a temperature greater than 600°C but not greater than 900°C, most of the fullerenes remain vaporized and pass through the filter elements 30 of the recovery device 12, while the soot contained in the exhaust gas is recovered by the recovery device 12. After the exhaust gas containing the fullerenes and the polycyclic aromatic compounds passes through the filter elements 30 of the recovery device 12, the exhaust gas flows through the second recovery device, in which the fullerenes excluding the polycyclic aromatic compounds are collected by the filter elements (i.e., heat-resistant filters) disposed therein. Some of the fullerenes are captured by the recovery device 12 and are mixed in the soot, but the amount of the mixed fullerenes is small. Thus, even if a solvent is used to separate the fullerenes from the soot, there is an advantage that the amount of the used solvent is remarkably decreased. In addition, most of the fullerenes can be collected in the second recovery device.

Alternatively, the exhaust gas supplied to the second recovery device may be regulated to a temperature of 200°C or less so that inexpensive synthetic resin material may be employed to form the filter elements (filters) of the second recovery device. In the alternative, the polycyclic aromatic compounds are mixed in the fullerenes. Thus, it is preferable to vary manufacturing conditions of the fullerenes in the reactor 11 (types of hydrocarbon fuels and synthesis conditions) to minimize generation of the polycyclic aromatic compounds.

The recovery device 12 used in the present embodiment (also the second recovery device) may employ a different type of filter elements 30, each of which includes a vibrator, an example of a vibrating unit operable to vibrate each of the filter elements 30. The use of the vibrators makes it feasible to remove the attached powder more efficiently from each of the filter elements 30.

In the methods for producing the fullerenes according to the present embodiment, the filter elements made of sintered metal are used in the filter elements of the recovery device. As an alternative, a heat-resistant filtering member made of porous ceramic may be employed. In this instance, the porous ceramic filter element can be used under conditions similar to those of the sintered metallic filter element. However, the porous ceramic filter element is disadvantageously reduced in strength, and must be twice to five times as thick as the sintered metallic filter element. In addition, a greater number of the porous ceramic filter elements must be used. For example, alumina, zirconium, silicon nitride, etc. may be used as the porous ceramic.

### EMPIRICAL EXAMPLES

The following discusses experiments that were conducted to assure the function and effects of the present invention.

### Experiment No. 1

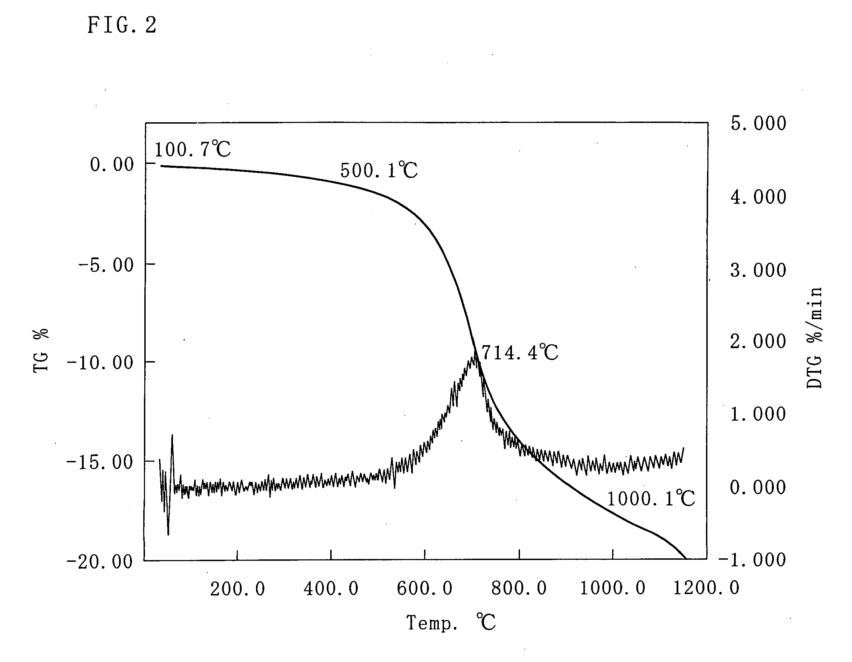

A change in weight of fullerene-containing soot in an amount of 3.8 mg was measured using a thermogravimetric measuring apparatus (manufactured by Seiko Inc., model TG-DTA6300). The fullerene-containing soot was produced in accordance with the combustion method using toluene, an example of hydrocarbon fuels, as a raw material. To measure the weight change, the soot placed in a dry nitrogen gas of 100 cc per minute was heated up to 1,150°C from room temperature at 20°C per minute. FIG. 2 shows results from the experiment. In FIG. 2, a leftward vertical axis, a rightward vertical axis, and a horizontal axis show weight reduction percentages with reference to the weight of 3.8 mg, variation percentages of the weight reduction percentage, and heating temperatures, respectively. As evidenced by the graphs showing the weight reduction and the weight variation percentages in FIG. 2, it was found that the weight was reduced in steps when the temperature reached 100°C or greater, and further that a reduction in weight accelerated at temperatures of nearly 400°C. In the high-temperature region of 600°C or greater, the fullerene-containing soot was dramatically reduced in weight. Considering that the fullerenes were sublimated at temperatures of 400 to 800°C, it was found that the sublimation of a large amount of the fullerenes in the soot dramatically reduced the weight of the soot.

### Experiment No. 2

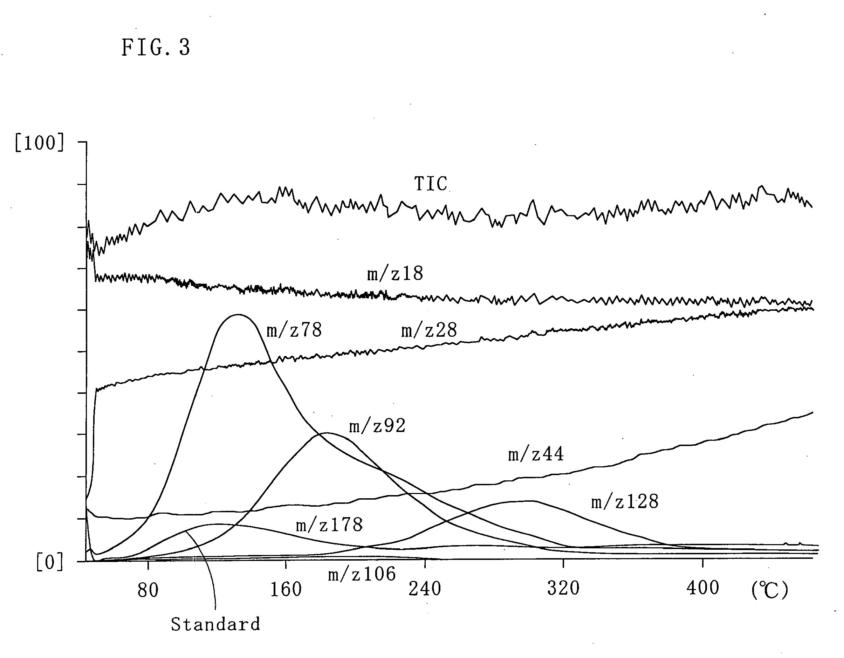

The present experiment employed, as a sample, fullerene-containing soot produced in accordance with a conventional combustion method in which the recovery device had the entrance temperature of 150 to 200°C. The fullerene-containing soot was heated to generate a gas, and the gas was checked to measure constituents thereof using a quadrupole mass spectrometer (manufactured by Japan Electron Optics Laboratory Co., LTD, model Automath AM2-15). FIG. 3 shows results from the measurement. The following shows fundamental measurement conditions:

| Measurement process: | Electron lonization |
|---|---|
| Furnace temperature: | 290°C |
| Transfer tube temperature: | 285°C |
| GC oven temperature: | 285°C |
| Interface temperature: | 285°C |
| lonization chamber temperature: | 260°C |
| Photomultiplier voltage: | 450 V |
| lonizing voltage: | 70 eV |
| lonizing current: | 300 µA |
| Mass range: | 10 to 400 amu |
| Scan speed: | 1,000 msec |

In FIG. 3, vertical and horizontal axes denote the relative intensity of ion spectra and heating temperatures, respectively. The gas resulting from the heating of the fullerene-containing soot contained aromatic compounds such as benzene, toluene, and xylene and polycyclic aromatic compounds such as naphthalene and anthracene. It was ascertained from FIG. 3 that peaks showing the presence of the aromatic compounds and the polycyclic aromatic compounds fell within the range less than temperatures at which the fullerenes were sublimated. As a result, it was found that the polycyclic aromatic compounds as well as the aromatic compounds such as benzene were almost all vaporized at temperatures of 300°C or greater. It was further found that substantially all of the aromatic compounds and polycyclic aromatic compounds were vaporized at temperatures of 350°C or greater. In FIG. 3, TIC and m/z denote a total ion chromatograph and a molecular weight, respectively. More specifically, m/z18 denotes water; m/z28 CO; m/z44 CO₂; m/z78 benzene; m/z92 toluene; m/z106 xylene; m/z128 naphthalene; and m/z178 anthracene.

The above experimental embodiment demonstrates that almost all of the polycyclic aromatic compounds can be removed in the form of gas by heating the exhaust gas at the temperatures of 300°C or greater (preferably 350°C or greater). The exhaust gas used in the experiment resulted from the combustion method, and contained the fullerenes and the soot (carbonaceous high-molecular weight components), and partly contained the polycyclic aromatic compounds (monocyclic or bi-cyclic aromatic compounds such as, e.g., benzene and toluene). Furthermore, it was found that a majority of the fullerenes remained unvaporized when the exhaust gas was heated at temperatures of at most 600°C (preferably at most 550°C). As a result, it is understood that a mixture of the fullerenes and soot in the form of powder excluding the polycyclic aromatic compounds can be collected by permitting the exhaust gas maintained at temperatures greater than 300°C but not greater than 600°C to flow through the recovery device 12.

### Experiment No. 3

Fullerenes were produced using the fullerene-producing apparatus 10 of FIG. 1. The burner 15 at the upper portion of the reactor 11 was formed by a circular plate-like, porous ceramic sintered body having an outer diameter of 250 mm. The porous ceramic sintered body was formed with minute apertures as discharge ports (ejection ports). The number of the apertures present in the porous ceramic sintered body for each 25 mm² ranged from 20 to 150.

A toluene gas and pure oxygen were used as a hydrocarbon fuel and an oxygen-containing gas, respectively. The toluene gas in a gas state was produced by heating toluene by an evaporating unit. The gaseous toluene was heated to the temperature of 200°C using a heat exchanger. The oxygen gas was supplied from an oxygen tank to a heat exchanger, in which the supplied oxygen gas was heated to the temperature of 200°C. The toluene gas having the flow rate of 435 gram per minute and the oxygen gas having the flow rate of 328.1 grams per minute were supplied to the burner 15, in which those two gases were premixed together, thereby providing a mixed gas. The mixed gas was ejected from the burner 15 into the reactor 11. At that time, the internal pressure of the reactor 11 was 40 Torr. The average flow velocity of the mixed gas discharged from the burner 15 was 302 cm per second at 298K.

The fullerenes were produced under the conditions as discussed above. The gas had a temperature of 1,400°C when leaving the reactor 11 through the exit thereof, but had a temperature of 480 to 500°C when entering the recovery device 12. As a result, the fullerenes "F" contained in the by-product soot "S" accounted for 17.0% of the mixture of the fullerenes "F" and the soot "S", as determined from a formula (F/(S+F)). No soot was seen to adhere to the burner 15 at the ejection portion thereof, and the reactor 11 was able to run continuously. It was ascertained that, when the soot sticking to the inner surface of the reactor 11 fell therefrom, a high-speed airflow thrust the falling soot out of the reactor 11.

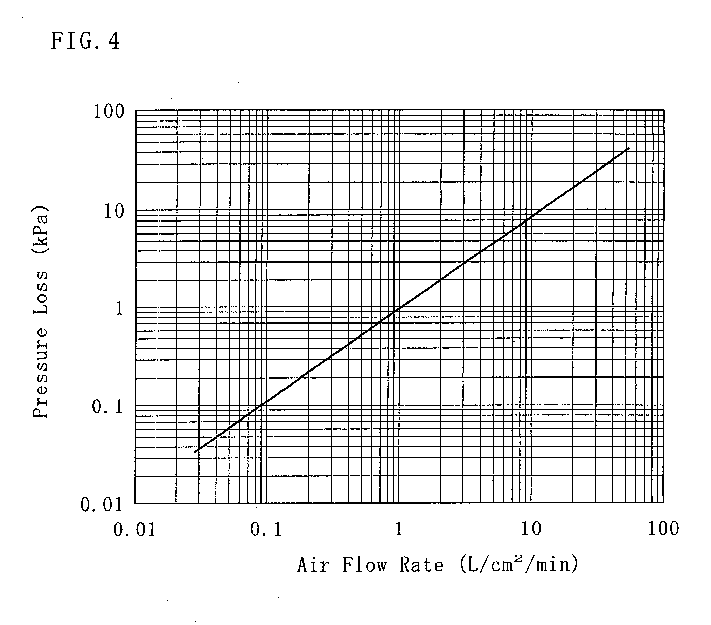

FIG. 4 illustrates a pressure loss of the sintered metallic (sintered alloy in particular) filter elements 30 with reference to an airflow rate ratio. The illustrated filter element 30 was made of austenitic stainless steel (18 chrome-8 nickel), an example of the heat-resistant filtering members used in the embodiment of the present invention. The filter element 30, made of sintered metal, was substantially 0.56 mm thick. The filter element 30 resulted in the pressure loss of some 7.5 Torr with reference to an airflow rate 1 L/cm²/minute. Each of the cylindrical filter elements 30 was 65 mm in outer diameter, and was 2,500 mm long. The number of the filter elements 30 of this type used in the recovery device 12 of FIG. 1 was 78. Those filter elements 30 were divided into six groups, in each of which the filter elements 30 were connected to the gas pressurizing unit 37 and the gas tank 38 through the opening and closing valves 36. When the opening and closing valves 36 were opened in turn, the filter elements 30 were backwashed in corresponding sequence.

A pressure sensor was disposed in each of the filter element groups. When a difference in pressure between the pressure sensor and another pressure sensor disposed within the recovery device 12 outside the filter elements 30 exceeded a backwashing start pressure that was determined by an appropriate value (e.g., 10 Torr) in a range of 7.5 and 11.3 Torr, a particular group of the opening and closing valves 36 was operated to backwash corresponding one of the filter element groups, provided the other filter element groups were not being backwashed. The filter elements 30 were backwashed by blowing an inert gas such as a nitrogen gas of the pressure of 0.4 MPa (some 4 kgfcm⁻²) out of each of the filter elements 30 from the interior to the exterior thereof. The backwashing was conducted for nearly two to ten minutes. In this instance, the opening and closing valves 36 may be switched on and off to apply pulsed pressures to the interiors of the filter elements 30. It was programmed that, when the pressures in a plurality of the filter element groups exceeded the backwashing start pressure at a time or at staggered time intervals, one of the filter element groups was preferentially backwashed, which received a backwashing start signal earlier than the remaining filter element groups or had been backwashed earlier than the remaining filter element groups last time. It was further programmed that, when the preferentially selected filter element group was completely backwashed, the next filter element group was backwashed.

According to the present experiment, a gas flow rate and a gas temperature in the piping passage 18 were 65 Nm³ per hour and 500°C, respectively. At this time, the pressure within the recovery device 12 outside the filter elements 30 was 34.5 Torr. Those conditions forced the fullerene-containing soot to adhere to the filter elements 30 on the outer surfaces thereof, thereby filtering the fullerene-containing soot. When a difference in pressure inside and outside any one of the filter element groups exceeded the backwashing start pressure, the filter elements in that particular filter element group were backwashed. A difference in pressure inside and outside the filter element group after the completion of the backwashing was 4.5 Torr, but a difference in pressure inside and outside the same filter element group immediately before the start of the backwashing was 7.5 to 11.3 Torr.

After the operations as discussed above were repeated, the fullerene-containing soot in an amount of 156 kg was collected or gathered for 120 hours. No soot was found to stick to the filter elements 30 on the outer surfaces thereof, and the operations were continuously executable.

### INDUSTRIALAPPLICABILITY

In the methods and apparatus for producing fullerenes according to the present invention, the heat-resistant filtering members made of metal or ceramic are employed as the filter elements that filtrate the combustion gas (exhaust gas) generated from the reactor to trap (recover) the soot-containing powder from the gas. Accordingly, the filter elements of the present invention are operable to recover the soot-containing powder excluding the polycyclic aromatic compounds from the high-temperature exhaust gas that normal filters are unable to filtrate. As a result, the fullerenes are produced efficiently at lower cost in accordance with the combustion method.

Particularly, the filter elements have a filtering flow rate capability in a range of 0.2 to 10 m³ /m²/minute, and the heat-resistant filtering members of the filter elements have a pressure loss in a range of 0.1 to 35 Torr. Thus, the filter elements are operable to filter the soot-containing powder while appropriately controlling speed of the exhaust gas passing therethrough without requiring extremely large-scale equipment. Furthermore, since the filter elements have a filtering flow rate capability of 10 m³ /m²/minute or less, the powder contained in the exhaust gas does not have great energy to enter the pores of the filter elements. Thus, reverse cleaning of the filter elements under appropriate pressures allows the filter elements to be restored to what they were originally, thereby enabling repeated use of the filter elements for a long period of time.

In the present invention, the fullerene- and soot-containing airflow from the reactor is regulated in temperature to a range of greater than 260°C (more preferably 300°C) to 900°C, thereby preventing the soot-containing powder from becoming wet in the recovery device. As a result, manageability of the powder is not reduced.

Pursuant to the method for producing fullerenes, when the fullerene- and soot-containing airflow supplied to the recovery device is regulated to a temperature greater than 600°C but not greater than 900°C, the vaporized fullerenes can pass through the recovery device. As a result, the solvent used to separate the fullerenes from the soot dramatically reduces in amount, and remarkable cost reduction in fullerene production is realized.

Particularly in the apparatus for producing fullerenes, the powder storing unit includes the powder level indicator for measuring the storage amount of the powder and the opening and closing valve for discharging the powder from the powder storing unit in response to the detection signal from the powder level indicator. Moreover, the soot separating unit includes the gas supply unit for blowing the non-oxygenated gas into each of the filter elements from the other side to the one side thereof. Thus, the apparatus allows the recovery device to run continuously, thereby improving production efficiency of the fullerenes.

## Claims

1. An apparatus for producing fullerenes, comprising a reactor operable to produce a fullerene- and soot-containing high-temperature airflow by imperfectly combusting or thermally decomposing a hydrocarbon fuel, and a recovery device operable to trap and recover a soot-containing powder contained in the airflow with or without fullerenes;
wherein a temperature regulating unit is provided between the reactor and the recovery device, the temperature regulating unit regulating the high-temperature airflow generated from the reactor to a temperature greater than 260°C but not greater than 900°C at which polycyclic aromatic compounds vaporize and supplying the airflow to the recovery device;
the recovery device includes a soot separating unit provided with a plurality of filter elements and a powder storing unit provided under the soot separating unit, the soot separating unit allowing the soot-containing powder to adhere to one side of each of the filter elements and the airflow to pass through each of the filter elements from the one side of each of the filter elements to the other side of each of the filter elements, the powder storing unit storing the separated soot-containing powder; and
each of the filter elements employs either one of metallic and ceramic heat-resistant filtering members having a filtering flow rate capability in a range of 0.2 to 10 m³ /m²/minute and a pressure loss in a range of 0.1 to 35 Torr.

2. The apparatus for producing fullerenes as defined in claim 1, wherein the pressure loss of the heat-resistant filtering members is set so that a pressure in the reactor falls in a range of 20 to 200 Torr.

3. The apparatus for producing fullerenes as defined in claim 1 or 2, wherein the reactor is operable to discharge the fullerene- and soot-containing high-temperature airflow from the reactor through a lower portion of the reactor.

4. The apparatus for producing fullerenes as defined in claim 3, wherein a burner operable to imperfectly combust or thermally decompose the hydrocarbon fuel is provided at a ceiling portion of the reactor.

5. The apparatus for producing fullerenes as defined in one of claims 1 to 4, wherein the temperature regulating unit includes a cylindrical body having a circular cross section, whose exterior is cooled down.

6. The apparatus for producing fullerenes as defined in claim 5, wherein the fullerene- and soot-containing high-temperature airflow enters the cylindrical body in a direction tangential to the cylindrical body and flows in a swirl inside the cylindrical body.

7. The apparatus for producing fullerenes as defined in one of claims 1 to 6, wherein the powder storing unit includes a powder level indicator and an opening and closing valve, the powder level indicator detecting a storage amount of the soot-containing powder, the opening and closing valve discharging the powder from the powder storing unit in response to a detection signal from the powder level indicator.

8. The apparatus for producing fullerenes as defined in one of claims 1 to 7, wherein a gas supply unit operable to pass a non-oxygenated gas through each of the filter elements from the other side of each of the filter elements to the one side of each of the filter elements is provided in the soot separating unit, thereby removing the soot-containing powder adhered to the one side.

9. The apparatus for producing fullerenes as defined in one of claims 1 to 8, wherein a vibrating unit operable to vibrate each of the filter elements is provided in the soot separating unit, thereby removing the soot-containing powder adhered to each of the filter elements by vibration.

10. The apparatus for producing fullerenes as defined in one of claims 1 to 9, wherein a partition is provided in the soot separating unit to divide the plurality of filter elements into a plurality of filter element groups.

11. The apparatus for producing fullerenes as defined in one of claims 1 to 10, wherein each of the filter elements is a bottomed cylinder into which the fullerene- and soot-containing high-temperature airflow flows from an outside of the cylinder to an inside of the cylinder.

12. A method for producing fullerenes, comprising:
a first step of producing a fullerene- and soot-containing high-temperature airflow by imperfectly combusting or thermally decomposing a hydrocarbon fuel in a reactor;
a second step of regulating the fullerene- and soot-containing airflow generated in the first step by a temperature regulating unit to a temperature greater than 300°C but not greater than 600°C at which polycyclic aromatic compounds contained in the airflow remain vaporized;
a third step of trapping and recovering soot together with fullerenes contained in the fullerene- and soot-containing airflow regulated in temperature in the second step using a recovery device having a plurality of filter elements, each of which is made of either one of metallic and ceramic heat-resistant filtering members, while allowing the polycyclic aromatic compounds in the airflow to pass through the recovery device; and
a fourth step of collecting the fullerenes by a solvent or vaporization from the mixture of the soot and the fullerenes recovered in the third step;
wherein each of the filter elements employs the heat-resistant filtering member having a filtering flow rate capability in a range of 0.2 to 10 m³/m²/minute and a pressure loss in a range of 0.1 to 35 Torr.

13. A method for producing fullerenes, comprising:
a first step of producing a fullerene- and soot-containing high-temperature airflow by imperfectly combusting or thermally decomposing a hydrocarbon fuel in a reactor;
a second step of regulating the fullerene- and soot-containing airflow generated in the first step by a temperature regulating unit to a temperature greater than 600°C but not greater than 900°C at which polycyclic aromatic compounds and fullerenes contained in the airflow remain vaporized;
a third step of flowing the fullerene- and soot-containing airflow regulated in temperature in the second step through a recovery device provided with a plurality of filter elements, each of which is made of either one of metallic and ceramic heat-resistant filtering members, thereby removing soot from the airflow; and
a fourth step of further cooling down the high-temperature airflow from which the soot has been removed in the third step to solidify the fullerenes contained in the airflow, thereby recovering the fullerenes;
wherein each of the filter elements employs the heat-resistant filtering member having a filtering flow rate capability in a range of 0.2 to 10 m³/m²/minute and a pressure loss in a range of 0.1 to 35 Torr.

14. The method for producing fullerenes as defined in claim 13, wherein the fourth step comprises cooling down the high-temperature airflow from which the soot has been removed to a temperature greater than 300°C but not greater than 600°C and passing the airflow through a heat-resistant filter, thereby recovering the fullerenes free of the polycyclic aromatic compounds.

15. The method for producing fullerenes as defined in one of claims 12 to 14, wherein the reactor is operable to discharge the fullerene- and soot-containing airflow generated in the reactor from the reactor through a lower portion of the reactor.
